# EUROPEAN PATENT SPECIFICATION

(11) **EP 4 389 607 B1**
(45) Date of publication and mention of the grant of the patent: **17.12.2025**
(21) Application number: 23219889.5
(22) Date of filing: 22.12.2023
(51) Int. Cl.: B64D 27/33, B64D 35/025, B64D 27/31, B64D 35/08

(54) **HYBRID AIRCRAFT PROPULSION SYSTEM WITH REMOTELY LOCATED ELECTRIC MACHINE**
HYBRIDES FLUGZEUGANTRIEBSSYSTEM MIT ENTFERNT ANGEORDNETER ELEKTROMASCHINE
SYSTÈME DE PROPULSION D'AÉRONEF HYBRIDE AVEC MACHINE ÉLECTRIQUE SITUÉE À DISTANCE

(30) Priority: 23.12.2022 US 202218088221
(43) Date of publication of application: 26.06.2024
(73) Proprietor: PRATT & WHITNEY CANADA CORP., Longueuil, Québec J4G 1A1 (CA)
(72) Inventor: WEAVER, Paul, (01BE5) Longueuil, J4G 1A1 (CA); CHATELOIS, Bruno, (01BE5) Longueuil, J4G 1A1 (CA)
(74) Representative: Dehns

(56) References cited:
- DE-C- 509 143
- FR-A1- 3 119 373
- GB-A- 526 460
- US-A- 2 462 201
- US-A- 4 955 561
- US-A1- 2018 044 028
- US-A1- 2018 141 670
- US-A1- 2019 300 186
- US-A1- 2020 277 061
- US-A1- 2020 277 076

## Description

### TECHNICAL FIELD

This invention relates generally to an aircraft and, more particularly, to a hybrid propulsion system for the aircraft.

### BACKGROUND INFORMATION

A hybrid propulsion system for an aircraft may include a thermal engine, such as a gas turbine engine, and an electric motor. The thermal engine and the electric motor may be coupled to and may selectively drive rotation of a propeller through a geartrain. Various types and configurations of hybrid aircraft propulsion systems are known in the art. While these known hybrid aircraft propulsion systems have various benefits, there is still room in the art for improvement.

US 4955561 A relates to a cogwheel drive mechanism for aircraft to drive one aircraft propeller or helicopter rotor through two transmissions, with two laterally displaced drive shafts and at least one driven shaft connected to a propeller shaft or a rotor shaft. The drive shafts are slightly angled due to a cardan joint.

US 2020/277061 A1 relates to an aircraft having a hybrid-electric propulsion system with batteries that are located in the fuselage of the aircraft.

US 2019/300186 A1 relates to a propeller propulsion unit comprising a heat engine and an electric motor and aircraft comprising such a propeller propulsion unit.

FR 3119373 A1 relates to a turbomachine for an aircraft including electric machines.

DE 509143 C relates to a motor arrangement for aircraft.

US 2020/277076 A1 relates to cooling system configurations for an engine of an aircraft having a hybrid-electric propulsion system.

US 2018/044028 A1 relates to a thrust force generation device for generating thrust force, that is mounted on an aircraft; and to an aircraft.

US 2462201 A relates to electrical airplane propulsion.

US 2018/141670 A1 relates to an airplane with an angled-mounted turboprop engine.

GB 526460 A describes improvements in or relating to the power plants of aircraft.

### SUMMARY

According to the present invention, there is provided an aircraft system as claimed in claim 1.

The second driveshaft may be angularly offset from the first driveshaft by an acute angle.

The second driveshaft may be angularly offset from the first driveshaft by a right angle.

The drivetrain may also include an angle drive coupled to and between the first driveshaft and the second driveshaft.

The aircraft system may also include an airframe structure, wherein the thermal engine and the electric machine are independently mounted to the airframe structure.

The airframe structure may be configured as an aircraft wing.

The electric machine may be housed within the aircraft wing at a leading edge of the aircraft wing.

The thermal engine may be disposed outside of the airframe structure. The electric machine may be at least partially housed within the airframe structure.

The electric machine may be vertically below the airframe structure.

The electric machine may be outside of the airframe structure.

The aircraft system may also include a nacelle at least partially housing the thermal engine and the electric machine.

The thermal engine may include an exhaust duct at an aft end of the thermal engine. At least a portion of the electric machine may be disposed aft of the exhaust duct.

The electric machine may be configurable as an electric motor during a motor mode of operation to drive rotation of the propulsor rotor through the drivetrain and the geartrain. The electric machine may also be configurable as an electric generator during a generator mode of operation where the thermal engine is configured to power the electric machine through the geartrain and the drivetrain.

The thermal engine may be configured as a gas turbine engine.

The propulsor rotor may be configured as or otherwise include a propeller rotor.

Within the scope of the claims, the invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial sectional schematic illustration of an aircraft system with the electric machine disposed / housed partially inside an aircraft wing structure.
FIG. 2 is a schematic illustration of a gas turbine engine.
FIG. 3 is a schematic illustration of an electric machine.
FIG. 4 is a partial sectional schematic illustration of the aircraft system with the electric machine disposed outside of and vertically below an aircraft wing.
FIG. 5 is a partial perspective cutaway schematic illustration of the aircraft system with the electric machine housed within the aircraft wing at a leading edge of the aircraft wing.

### DETAILED DESCRIPTION

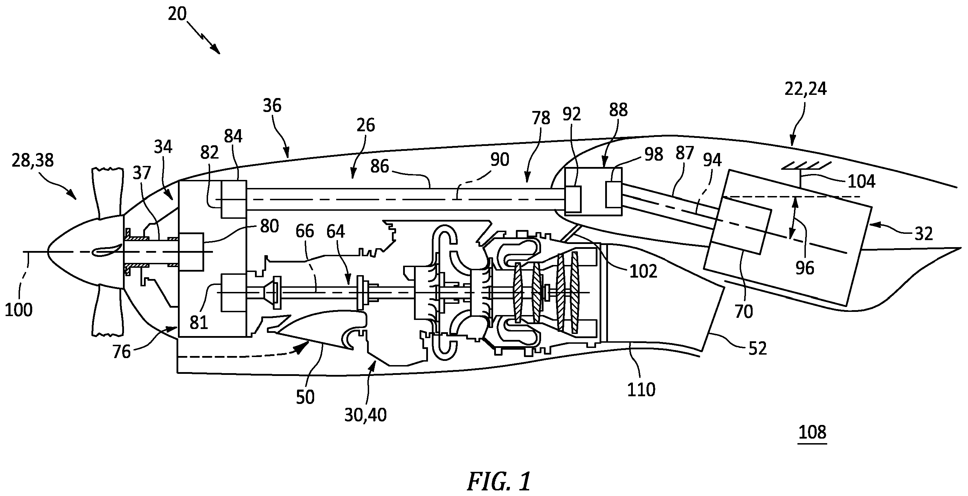

FIG. 1 illustrates a system 20 for an aircraft such as an airplane. This aircraft system 20 includes an airframe structure 22 such as an aircraft wing 24. The aircraft system 20 also includes a hybrid aircraft propulsion system 26 mounted to the airframe structure 22. The aircraft propulsion system 26 includes a propulsor rotor 28, a thermal engine 30 (e.g., a heat engine), an electric machine 32 and a power transmission system 34. The aircraft propulsion system 26 also includes a nacelle 36 at least partially housing and providing an aerodynamic cover for one or more components 30, 32 and/or 34 of the aircraft propulsion system 26.

The propulsor rotor 28 is a bladed rotor mechanically driven by an output shaft 37 or another torque transmission device. This propulsor rotor 28 may be an open rotor such as a propeller rotor 38 for a propeller engine; e.g., a hybrid turboprop engine. The present disclosure, however, is not limited to such an exemplary propulsor rotor. The propulsor rotor 28, for example, may alternatively be configured as a rotor (e.g., a main rotor) for a helicopter engine (e.g., a hybrid turboshaft engine), or a rotor (e.g., a fan rotor, a compressor rotor, etc.) for a turbofan engine or a turbojet engine. However, for ease of description, the propulsor rotor 28 may be described below as the propeller rotor 38.

The thermal engine 30 is configured to convert chemical energy stored within fuel into mechanical power. The thermal engine 30 of FIG. 1, for example, is configured as or may otherwise include a gas turbine engine 40. The present disclosure, however, is not limited to such an exemplary thermal engine. The thermal engine 30, for example, may alternatively be configured as or otherwise include a reciprocating piston internal combustion (IC) engine or a rotary internal combustion (IC) engine. However, for ease of description, the thermal engine 30 may be described and/or referred to as herein the gas turbine engine 40.

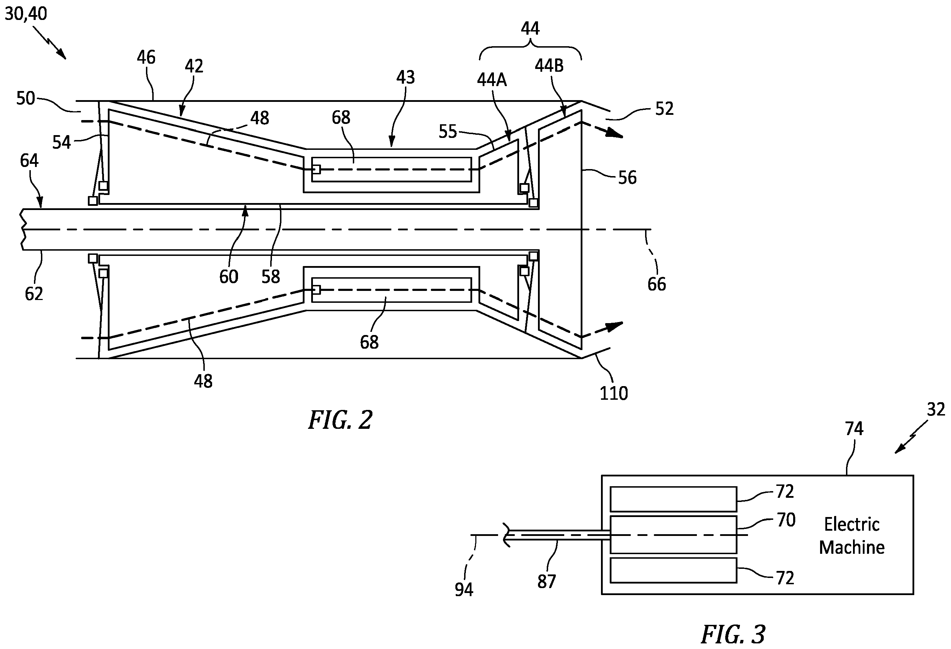

Referring to FIG. 2, the gas turbine engine 40 includes a compressor section 42, a combustor section 43 and a turbine section 44. The turbine section 44 may include a high pressure turbine (HPT) section 44A and a low pressure turbine (LPT) section 44B; e.g., a power turbine section. The gas turbine engine 40 also includes an engine case 46 housing the engine sections 42-44B.

The compressor section 42, the combustor section 43, the HPT section 44A and the LPT section 44B are arranged sequentially along a core flowpath 48 within the gas turbine engine 40. This core flowpath 48 extends within the gas turbine engine 40 from an upstream airflow inlet 50 into the gas turbine engine 40 to a downstream combustion products exhaust 52 from the gas turbine engine 40.

Each of the engine sections 42, 43A and 44B includes a respective bladed rotor 54-56. Each of these bladed rotors 54-56 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The compressor rotor 54 is connected to the HPT rotor 55 through a high speed shaft 58. At least the compressor rotor 54, the HPT rotor 55 and the high speed shaft 58 may collectively form a high speed rotating structure 60 of the gas turbine engine 40. The LPT rotor 56 is connected to a low speed shaft 62, which low speed shaft 62 may extend axially through a bore of the high speed rotating structure 60 and its high speed shaft 58. At least the LPT rotor 56 and the low speed shaft 62 may collectively form a low speed rotating structure 64 of the gas turbine engine 40. Each of the rotating structures 60, 64 of FIG. 2 is rotatable about an axial centerline 66 (e.g., a rotational axis) of the gas turbine engine 40.

During gas turbine engine operation, air enters the core flowpath 48 through the airflow inlet 50 and is directed into the compressor section 42. The air within the core flowpath 48 may be referred to as "core air". This core air is compressed by the compressor rotor 54 and directed into a combustion chamber 68 of a combustor within the combustor section 43. The fuel is injected into the combustion chamber 68 by one or more fuel injectors and mixed with the compressed air to provide a fuel-air mixture. This fuel-air mixture is ignited and combustion products thereof flow through and sequentially cause the HPT rotor 55 and the LPT rotor 56 to rotate. The rotation of the HPT rotor 55 drives rotation of the compressor rotor 54 and, thus, compression of the air received from the airflow inlet 50. The rotation of the LPT rotor 56 and, more generally, the low speed rotating structure 64 provides mechanical power for driving (e.g., rotating) the propulsor rotor 28 of FIG. 1. The present disclosure, however, is not limited to such an exemplary gas turbine engine configuration. For example, in other embodiments, the low speed rotating structure 64 may also include a compressor rotor. In still other embodiments, the low speed rotating structure 64 may be omitted and the high speed rotating structure 60 may be configured for providing the mechanical power for driving the propulsor rotor 28 of FIG. 1.

Referring to FIG. 3, the electric machine 32 may be configurable as an electric motor and/or an electric generator. For example, during a motor mode of operation, the electric machine 32 may operate as the electric motor to convert electricity received from a power source (e.g., a battery bank) into mechanical power. This mechanical power may be utilized for various purposes within the aircraft propulsion system 26 of FIG. 1 such as, for example, rotating the propulsor rotor 28 and/or rotating a rotating structure within the thermal engine 30 (e.g., the low speed rotating structure 64 of FIG. 2) for various purposes. During a generator mode of operation, the electric machine 32 may operate as the electric generator to convert mechanical power received from, for example, the thermal engine 30 into electricity. This electricity may be utilized for various purposes within the aircraft propulsion system 26 such as, for example, electrically powering one or more electric components of the aircraft propulsion system 26 and/or charging the power source. The electricity may also or alternatively be utilized for various purposes outside of the aircraft propulsion system 26 such as, for example, electrically powering one or more electric components in the aircraft. Of course, in other embodiments, the electric machine 32 may alternatively be configured as (e.g., only) a dedicated electric motor.

The electric machine 32 of FIG. 3 includes an electric machine rotor 70 and an (e.g., annular) electric machine stator 72, where the electric machine stator 72 may be radially outboard of and circumscribe the electric machine rotor 70. The electric machine 32 also includes an electric machine case 74 that at least partially or completely houses the electric machine rotor 70 and the electric machine stator 72.

Referring to FIG. 1, the power transmission system 34 is configured to transmit mechanical power from the thermal engine 30 and/or the electric machine 32 to the propulsor rotor 28. The power transmission system 34 may also be configured to transmit mechanical power between the thermal engine 30 and the electric machine 32 during, for example, the generator mode of operation and/or various other modes of operation. The power transmission system 34 of FIG. 1 includes a geartrain 76 (e.g., a reduction gear system) for operatively coupling and transmitting mechanical power between two or more of the aircraft propulsion system components 28, 30 and/or 78. The power transmission system 34 of FIG. 1 also includes a drivetrain 78 for operatively coupling and transmitting mechanical power between the geartrain 76 and the electric machine 32.

The geartrain 76 of FIG. 1 includes a plurality of power transfer elements 80-82; e.g., shafts, gears, carriers, couplers, etc. The propulsor power transfer element 80 (e.g., a power output) is operatively coupled to and rotatable with the propulsor rotor 28 through the output shaft 37. The engine power transfer element 81 (e.g., a power input and/or a power output) is operatively coupled to and rotatable with the low speed rotating structure 64. The machine power transfer element 82 (e.g., a power input and/or a power output) is operatively coupled to and rotatable with the electric machine rotor 70 through the drivetrain 78. The power transfer elements 80-82 are arranged together within a geartrain case 84 such that mechanical power may be transmitted through the geartrain 76 and its power transfer elements 80-82, for example: (1) from the electric machine 32 to the propulsor rotor 28; (2) from the thermal engine 30 to the propulsor rotor 28; (3) from the thermal engine 30 to the electric machine 32; and/or (4) from the electric machine 32 to the thermal engine 30.

The drivetrain 78 of FIG. 1 includes a first driveshaft 86 and a second driveshaft 87. The drivetrain 78 may also include an angle drive 88 (e.g., bevel gearing, an angle gearbox, etc.) or another coupling (such as universal joints or CV joints) and/or transmission arranged between the first driveshaft 86 and the second driveshaft 87.

The first driveshaft 86 is rotatable about a first driveshaft rotational axis 90, which rotational axis 90 may be parallel with and/or (e.g., vertically) offset from the centerline 66. This first driveshaft 86 extends axially along its rotational axis 90 between (e.g., and to) the geartrain 76 and the angle drive 88. A first end of the first driveshaft 86 may be coupled to and rotatable with the machine power transfer element 82 (e.g., a shaft, a gear such as a bevel gear, a carrier, a coupler, etc.) of the geartrain 76. A second end of the first driveshaft 86 may be coupled to and rotatable with a power transfer element 92 of the angle drive 88.

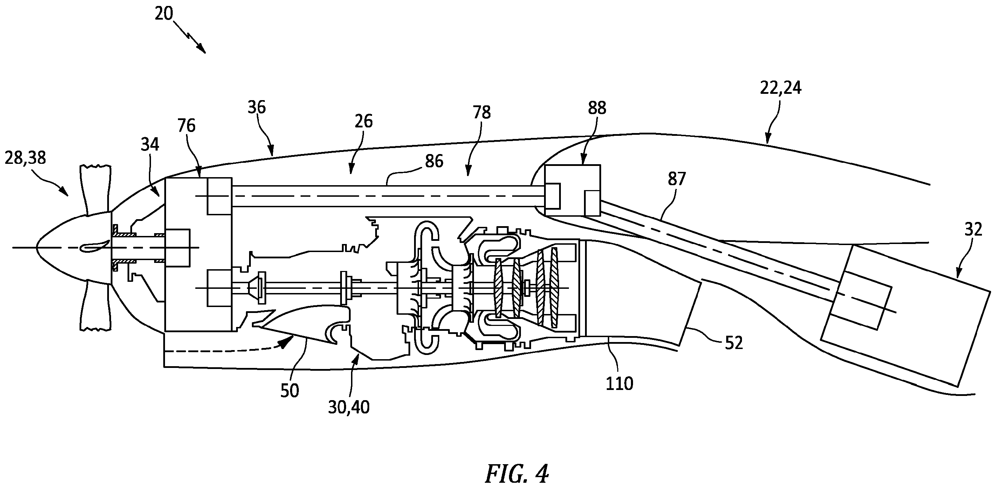

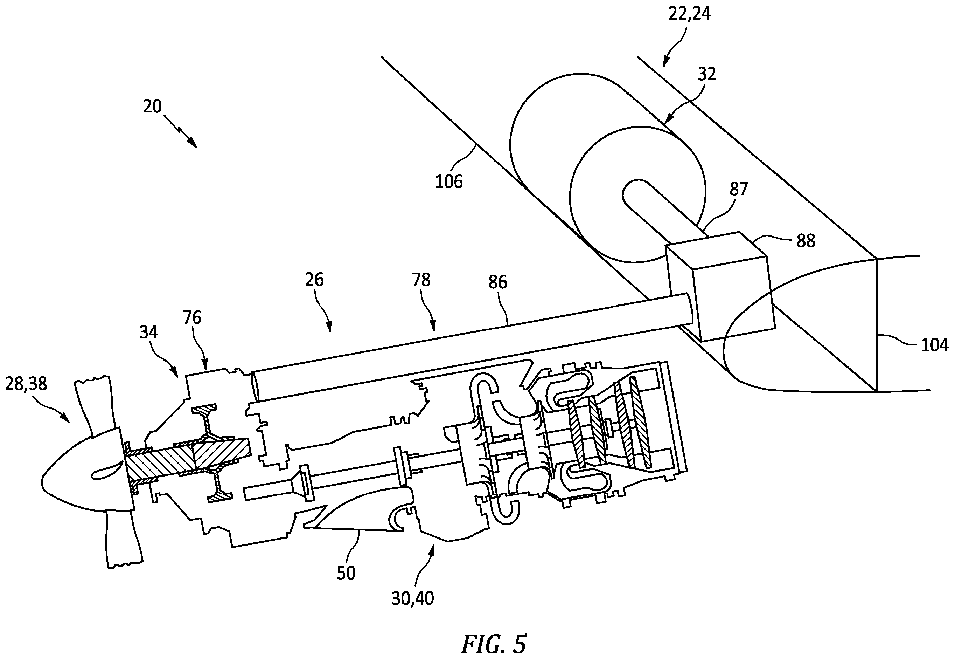

The second driveshaft 87 is rotatable about a second driveshaft rotational axis 94, which rotational axis 94 is angularly offset from (e.g., non-parallel with) the first driveshaft rotational axis 90 (and the centerline 66) by an offset angle 96. The offset angle 96 may be a (e.g., non-zero) acute angle or a right angle. The offset angle 96, for example, may be between fifteen degrees (15°) and forty-five degrees (45°), between forty-five degrees (45°) and seventy-five degrees (75°), or between seventy-five degrees (75°) and ninety degrees (90°) depending on a location of the electric machine 32; see also FIGS. 4 and 5. The second driveshaft 87 extends axially along its rotational axis 94 between (e.g., and to) the electric machine 32 and its electric machine rotor 70 and the angle drive 88. A first end of the second driveshaft 87 may be coupled to and rotatable with the electric machine rotor 70. A second end of the second driveshaft 87 may be coupled to and rotatable with a power transfer element 98 (e.g., a shaft, a gear such as a bevel gear, a carrier, a coupler, etc.) of the angle drive 88.

With the foregoing arrangement, the first driveshaft 86 is coupled to, arranged between and operatively connects the geartrain 76 and the angle drive 88. The angle drive 88 is coupled to, arranged between and operatively connects the first driveshaft 86 and the second driveshaft 87. The second driveshaft 87 is coupled to, arranged between and operatively connects the angle drive 88 and the electric machine 32. Thus, the electric machine rotor 70 is rotatably coupled to the machine power transfer element 82 of the geartrain 76 sequentially through the drivetrain members 87, 88 and 86.

By including the drivetrain 78 and canting (e.g., angularly offsets) the second driveshaft 87 relative to the first driveshaft 86, the electric machine 32 may be remotely located from the geartrain 76 and/or the thermal engine 30. The electric machine 32 of FIG. 1, for example, is arranged downstream and/or aft of the thermal engine 30. The thermal engine 30 of FIG. 1, in particular, is disposed axially between (A) the propulsor rotor 28 / the geartrain 76 and (B) the electric machine 32 relative to a rotational axis 100 of the propulsor rotor 28, which rotational axis 100 may be parallel with and/or vertically offset from the centerline 66 and/or the axis 90. The electric machine 32 may thereby be at least partially housed within the airframe structure 22 rather than (e.g., completely) within the nacelle 36 and adjacent (e.g., vertically and/or laterally next to) the thermal engine 30. Reducing the number of components housed within the nacelle 36 may reduce nacelle size, decrease nacelle drag and/or reduce nacelle blockage of thrust generated by the propulsor rotor 28. Furthermore, reducing the number of components housed within the nacelle 36 may reduce overhung weight of the aircraft propulsion system 26 cantilevered off of the airframe structure 22.

The thermal engine 30 and the electric machine 32 may be independently mounted to the airframe structure 22. The thermal engine 30, for example, may be mounted to the airframe structure 22 through a pylon structure 102 (schematically shown). The electric machine 32 may be mounted (e.g., directly) to one or more internal supports 104 (schematically shown) of the airframe structure 22. Thus, the electric machine 32 is not connected to the airframe structure 22 though the thermal engine 30, and the thermal engine 30 is not connected to the airframe structure 22 through the electric machine 32. However, it is contemplated that the thermal engine 30 and the electric machine 32 may be mounted to the airframe structure 22 through a common mounting structure (e.g., a pylon or otherwise) where, for example, the thermal engine 30 and the electric machine 32 are still independently supported; e.g., not connected to the airframe structure 22 through one another.

The aircraft propulsion system components 28, 30, 76 and 86 may be arranged outside of (e.g., external to) the airframe structure 22. The electric machine 32 (e.g., and the drivetrain members 87 and 88), however, may be at least partially (or completely) housed within the airframe structure 22. The drivetrain members 87 and 88 of FIG. 1, for example, are disposed (e.g., completely) within the airframe structure 22. The electric machine 32 is disposed partially within the airframe structure 22 and partially outside of (e.g., vertically below) the airframe structure 22. Here, the portion of the electric machine 32 below the airframe structure 22 may be housed within an aft portion of the nacelle 36. In other embodiments, referring to FIG. 4, the electric machine 32 may be disposed outside of the airframe structure 22. The electric machine 32 of FIG. 4, for example, is disposed vertically below the airframe structure 22 and (e.g., completely) housed within the aft portion of the nacelle 36, or another housing. In still other embodiments, referring to FIG. 5, the electric machine 32 may be disposed (e.g., completely) within the airframe structure 22. The electric machine 32 of FIG. 5, in particular, is disposed at and extends along a leading edge 106 of the airframe structure 22; e.g., the aircraft wing 24. In such embodiments, the electric machine 32 is disposed to a lateral side of the thermal engine 30. By contrast, in the embodiments of FIGS. 1 and 4, the electric machine 32 may (or may not) be laterally aligned with and/or laterally overlap the thermal engine 30.

In some embodiments, referring to FIG. 1, the combustion products output from the thermal engine 30 may be exhausted from the aircraft propulsion system 26 into an exterior environment 108 through an exhaust duct 110, which exhaust duct 110 may form the combustion products exhaust 52. This exhaust duct 110 may be arranged at an aft and/or downstream end of the thermal engine 30. At least a (e.g., forward and/or upstream) portion of the electric machine 32 may longitudinally overlap the exhaust duct 110. At least a (e.g., aft and/or downstream) portion of the electric machine 32 may be disposed aft and/or downstream of the exhaust duct 110. In other embodiments however, referring to FIG. 4, an entirety of the electric machine 32 may be disposed aft and/or downstream of the exhaust duct 110.

The airframe structure 22 is described above as the aircraft wing 24 for ease of description. It is contemplated, however, the airframe structure 22 may alternatively be configured as part of an aircraft fuselage where, for example, the aircraft propulsion system 26 is mounted to the aircraft fuselage and/or the aircraft is configured as a helicopter.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects, as long as they remain within the scope of the claims. Accordingly, the present disclosure is not to be restricted except in light of the attached claims.

## Claims

1. An aircraft system (20), comprising:
a propulsor rotor (28);
a geartrain (76) including a power output (80), a first power input (81) and a second power input (82), the power output (80) coupled to the propulsor rotor (28);
a thermal engine (30) configured to drive rotation of the propulsor rotor (28) through the geartrain (76), the thermal engine (30) coupled to the first power input (81);
a drivetrain (78) including a first driveshaft (86) and a second driveshaft (87), the first driveshaft (86) coupled to and between the second power input (82) and the second driveshaft (87), and the second driveshaft (87) angularly offset from the first driveshaft (86); and
an electric machine (32) configured to drive rotation of the propulsor rotor (28) through the drivetrain (78) and the geartrain (76), the second driveshaft (87) coupled to and between the first driveshaft (86) and the electric machine (32), wherein:
the propulsor rotor (28) is rotatable about a rotational axis (100); and
the thermal engine (30) is located axially between the geartrain (76) and the electric machine (32) along the rotational axis (100).

2. The aircraft system (20) of claim 1, wherein the second driveshaft (87) is angularly offset from the first driveshaft (86) by an acute angle.

3. The aircraft system (20) of claim 1, wherein the second driveshaft (87) is angularly offset from the first driveshaft (86) by a right angle.

4. The aircraft system (20) of any preceding claim, wherein the drivetrain (78) further includes an angle drive (88) coupled to and between the first driveshaft (86) and the second driveshaft (87).

5. The aircraft system (20) of any preceding claim, further comprising an airframe structure (22), wherein the thermal engine (30) and the electric machine (32) are independently mounted to the airframe structure (22).

6. The aircraft system (20) of claim 5, wherein the electric machine (32) is vertically below the airframe structure (22).

7. The aircraft system (20) of claim 5 or 6, wherein the electric machine (32) is outside of the airframe structure (22).

8. The aircraft system (20) of claim 5, 6 or 7, wherein the airframe structure (22) is configured as an aircraft wing (24).

9. The aircraft system (20) of claim 8, wherein the electric machine (32) is housed within the aircraft wing (24) at a leading edge (106) of the aircraft wing (24).

10. The aircraft system (20) of any of claims 5 to 9, wherein:
the thermal engine (30) is disposed outside of the airframe structure (22); and
the electric machine (32) is at least partially housed within the airframe structure (22).

11. The aircraft system (20) of any preceding claim, further comprising a nacelle (36) at least partially housing the thermal engine (30) and the electric machine (32).

12. The aircraft system (20) of any preceding claim, wherein:
the thermal engine (30) includes an exhaust duct (110) at an aft end of the thermal engine (30); and
at least a portion of the electric machine (32) is disposed aft of the exhaust duct (110).

13. The aircraft system (20) of any preceding claim, wherein:
the electric machine (32) is configured to act as an electric motor during a motor mode of operation to drive rotation of the propulsor rotor (28) through the drivetrain (78) and the geartrain (76); and
the electric machine (32) is further configured to act as an electric generator during a generator mode of operation where the thermal engine (30) is configured to power the electric machine (32) through the geartrain (76) and the drivetrain (78).

14. The aircraft system (20) of any preceding claim, wherein the thermal engine (30) is configured as a gas turbine engine (40).

15. The aircraft system (20) of any preceding claim, wherein the propulsor rotor (28) comprises a propeller rotor (38).

## Patentansprüche

1. Luftfahrzeugsystem (20), umfassend:
einen Antriebsrotor (28);
ein Getriebesystem (76) mit einem Leistungsabtrieb (80), einem ersten Leistungsantrieb (81) und einem zweiten Leistungsantrieb (82), wobei der Leistungsabtrieb (80) mit dem Antriebsrotor (28) gekoppelt ist;
einen Wärmemotor (30), der so ausgelegt ist, dass er über das Getriebesystem (76) die Drehung des Antriebsrotors (28) antreibt, wobei der Wärmemotor (30) mit dem ersten Leistungsantrieb (81) gekoppelt ist;
ein Antriebsstrangsystem (78) mit einer ersten Antriebswelle (86) und einer zweiten Antriebswelle (87), wobei die erste Antriebswelle (86) mit dem zweiten Leistungsantrieb (82) und der zweiten Antriebswelle (87) gekoppelt ist, und wobei die zweite Antriebswelle (87) gegenüber der ersten Antriebswelle (86) winkelversetzt angeordnet ist; und
eine elektrische Maschine (32), die so ausgelegt ist, dass sie die Drehung des Antriebsrotors (28) über den Antriebsstrang (78) und das Getriebesystem (76) antreibt, wobei die zweite Antriebswelle (87) mit der ersten Antriebswelle (86) und der elektrischen Maschine (32) gekoppelt ist, wobei:
der Antriebsrotor (28) um eine Rotationsachse (100) drehbar ist; und
der Wärmemotor (30) axial zwischen dem Getriebesystem (76) und der elektrischen Maschine (32) entlang der Rotationsachse (100) angeordnet ist.

2. Luftfahrzeugsystem (20) nach Anspruch 1, **dadurch gekennzeichnet, dass** die zweite Antriebswelle (87) gegenüber der ersten Antriebswelle (86) um einen spitzen Winkel winkelversetzt ist.

3. Luftfahrzeugsystem (20) nach Anspruch 1, **dadurch gekennzeichnet, dass** die zweite Antriebswelle (87) gegenüber der ersten Antriebswelle (86) um einen rechten Winkel winkelversetzt ist.

4. Luftfahrzeugsystem (20) nach einem der vorhergehenden Ansprüche, **dadurch gekennzeichnet, dass** der Antriebsstrang (78) ferner ein Winkelgetriebe (88) umfasst, das mit der ersten Antriebswelle (86) und der zweiten Antriebswelle (87) gekoppelt ist.

5. Luftfahrzeugsystem (20) nach einem der vorhergehenden Ansprüche, ferner umfassend eine Flugzeugstruktur (22), wobei der Wärmemotor (30) und die elektrische Maschine (32) unabhängig voneinander an der Flugzeugstruktur (22) montiert sind.

6. Luftfahrzeugsystem (20) nach Anspruch 5, **dadurch gekennzeichnet, dass** die elektrische Maschine (32) vertikal unterhalb der Flugzeugstruktur (22) angeordnet ist.

7. Luftfahrzeugsystem (20) nach Anspruch 5 oder 6, **dadurch gekennzeichnet, dass** die elektrische Maschine (32) außerhalb der Flugzeugstruktur (22) angeordnet ist.

8. Luftfahrzeugsystem (20) nach Anspruch 5, 6 oder 7, **dadurch gekennzeichnet, dass** die Flugzeugstruktur (22) als Flugzeugflügel (24) ausgebildet ist.

9. Luftfahrzeugsystem (20) nach Anspruch 8, **dadurch gekennzeichnet, dass** die elektrische Maschine (32) innerhalb des Flugzeugflügels (24) an einer Vorderkante (106) des Flugzeugflügels (24) untergebracht ist.

10. Luftfahrzeugsystem (20) nach einem der Ansprüche 5 bis 9, **dadurch gekennzeichnet, dass**:
der Wärmemotor (30) außerhalb der Flugzeugstruktur (22) angeordnet ist; und
die elektrische Maschine (32) zumindest teilweise innerhalb der Flugzeugstruktur (22) untergebracht ist.

11. Luftfahrzeugsystem (20) nach einem der vorhergehenden Ansprüche, ferner umfassend eine Gondel (36), die den Wärmemotor (30) und die elektrische Maschine (32) zumindest teilweise aufnimmt.

12. Luftfahrzeugsystem (20) nach einem der vorhergehenden Ansprüche, **dadurch gekennzeichnet, dass**:
der Wärmemotor (30) einen Auspuffkanal (110) an einem hinteren Ende des Wärmemotors (30) umfasst; und
mindestens ein Teil der elektrischen Maschine (32) hinter dem Auspuffkanal (110) angeordnet ist.

13. Luftfahrzeugsystem (20) nach einem der vorhergehenden Ansprüche, **dadurch gekennzeichnet, dass**:
die elektrische Maschine (32) so ausgelegt ist, dass sie in einem Motorbetriebsmodus als Elektromotor wirkt, um die Drehung des Antriebsrotors (28) über den Antriebsstrang (78) und das Getriebesystem (76) anzutreiben; und
die elektrische Maschine (32) ferner so ausgelegt ist, dass sie in einem Generatorbetriebsmodus als elektrischer Generator wirkt, wobei der Wärmemotor (30) die elektrische Maschine (32) über das Getriebesystem (76) und den Antriebsstrang (78) antreibt.

14. Luftfahrzeugsystem (20) nach einem der vorhergehenden Ansprüche, **dadurch gekennzeichnet, dass** der Wärmemotor (30) als Gasturbinentriebwerk (40) ausgebildet ist.

15. Luftfahrzeugsystem (20) nach einem der vorhergehenden Ansprüche, **dadurch gekennzeichnet, dass** der Antriebsrotor (28) einen Propellerrotor (38) umfasst.

## Revendications

1. Système d'aéronef (20) comprenant :
un rotor propulseur (28) ;
un train d'engrenages (76) comprenant une sortie de puissance (80), une première entrée de puissance (81) et une seconde entrée de puissance (82), la sortie de puissance (80) étant couplée au rotor propulseur (28) ;
un moteur thermique (30) configuré pour entraîner en rotation le rotor propulseur (28) via le train d'engrenages (76), le moteur thermique (30) étant couplé à la première entrée de puissance (81) ;
une chaîne de transmission (78) comprenant un premier arbre d'entraînement (86) et un second arbre d'entraînement (87), le premier arbre d'entraînement (86) étant couplé à et entre la seconde entrée de puissance (82) et le second arbre d'entraînement (87), et le second arbre d'entraînement (87) étant décalé angulairement par rapport au premier arbre d'entraînement (86) ; et
une machine électrique (32) configurée pour entraîner en rotation le rotor propulseur (28) via la chaîne de transmission (78) et le train d'engrenages (76), le second arbre d'entraînement (87) étant couplé à la fois au premier arbre d'entraînement (86) et à la machine électrique (32) et étant disposé entre ceux-ci, dans lequel :
le rotor propulseur (28) est apte à tourner autour d'un axe de rotation (100) ; et
le moteur thermique (30) est disposé axialement entre le train d'engrenages (76) et la machine électrique (32) le long de l'axe de rotation (100).

2. Système d'aéronef (20) selon la revendication 1, dans lequel le second arbre d'entraînement (87) est décalé angulairement par rapport au premier arbre d'entraînement (86) d'un angle aigu.

3. Système d'aéronef (20) selon la revendication 1, dans lequel le second arbre d'entraînement (87) est décalé angulairement par rapport au premier arbre d'entraînement (86) d'un angle droit.

4. Système d'aéronef (20) selon l'une quelconque des revendications précédentes, dans lequel la chaîne de transmission (78) comprend en outre un renvoi d'angle (88) couplé entre le premier arbre d'entraînement (86) et le second arbre d'entraînement (87).

5. Système d'aéronef (20) selon l'une quelconque des revendications précédentes, comprenant en outre une structure de cellule (22), dans lequel le moteur thermique (30) et la machine électrique (32) sont montés de manière indépendante sur la structure de cellule (22).

6. Système d'aéronef (20) selon la revendication 5, dans lequel la machine électrique (32) est disposé verticalement au-dessous de la structure de cellule (22).

7. Système d'aéronef (20) selon la revendication 5 ou 6, dans lequel la machine électrique (32) est à l'extérieur de la structure de cellule (22).

8. Système d'aéronef (20) selon la revendication 5, 6 ou 7, dans lequel la structure de cellule (22) est configurée en aile d'aéronef (24) .

9. Système d'aéronef (20) selon la revendication 8, dans lequel la machine électrique (32) est logée à l'intérieur de l'aile d'aéronef (24) au niveau d'un bord d'attaque (106) de l'aile d'aéronef (24) .

10. Système d'aéronef (20) selon l'une quelconque des revendications 5 à 9, dans lequel :
le moteur thermique (30) est disposé à l'extérieur de la structure de cellule (22) ; et
la machine électrique (32) est au moins partiellement logée à l'intérieur de la structure de cellule (22).

11. Système d'aéronef (20) selon l'une quelconque des revendications précédentes, comprenant en outre une nacelle (36) logeant au moins partiellement le moteur thermique (30) et la machine électrique (32).

12. Système d'aéronef (20) selon l'une quelconque des revendications précédentes, dans lequel :
le moteur thermique (30) comprend, à une extrémité arrière, un conduit d'échappement (110) ; et
au moins une partie de la machine électrique (32) est disposée en arrière du conduit d'échappement (110).

13. Système d'aéronef (20) selon l'une quelconque des revendications précédentes, dans lequel :
la machine électrique (32) est configurée pour fonctionner en mode moteur afin d'entraîner en rotation le rotor propulseur (28) via la chaîne de transmission (78) et le train d'engrenages (76) ; et
la machine électrique (32) est en outre configurée pour fonctionner en mode générateur, le moteur thermique (30) étant configuré pour alimenter la machine électrique (32) via le train d'engrenages (76) et la chaîne de transmission (78).

14. Système d'aéronef (20) selon l'une quelconque des revendications précédentes, dans lequel le moteur thermique (30) est un moteur à turbine à gaz (40).

15. Système d'aéronef (20) selon l'une quelconque des revendications précédentes, dans lequel le rotor propulseur (28) comprend un rotor d'hélice (38).
